# EUROPEAN PATENT APPLICATION

(11) **EP 4 276 491 A1**
(43) Date of publication of application: **15.11.2023**
(21) Application number: 21922511.7
(22) Date of filing: 30.11.2021
(51) Int. Cl.: G01S 7/495

(54) **ANTI-INTERFERENCE METHOD AND DEVICE FOR LIDAR**

(30) Priority: 29.01.2021 CN 202110126177
(71) Applicant: Huawei Technologies Co., Ltd., Shenzhen, Guangdong 518129 (CN)
(72) Inventor: YU, Zhong, Shenzhen, Guangdong 518129 (CN); SHI, Xianling, Shenzhen, Guangdong 518129 (CN); CHEN, Shanjie, Shenzhen, Guangdong 518129 (CN)
(74) Representative: Körber, Martin Hans
(86) International application number: PCT/CN2021/134652
(87) International publication number: WO 2022/160921

(57) **Abstract**

An anti-interference method, a lidar, and a vehicle are provided. The lidar may include a control module (301), a laser (302), and a detector (303). The control module (301) is configured to determine N first sequences and N groups of first time intervals, where N is an integer greater than or equal to 1. The laser (302) is configured to emit N first laser signals based on the N first sequences and the N groups of first time intervals. The detector (303) is configured to: receive N second laser signals, and convert the N second laser signals into electrical signals, to obtain N first electrical signals. The control module (301) is further configured to determine N second sequences and N groups of second time intervals based on the N first electrical signals. The method can improve an anti-interference capability of the lidar.

## Description

This application claims priority to Chinese Patent Application No. 202110126177.6, filed with the China National Intellectual Property Administration on January 29, 2021 and entitled "LIDAR ANTI-INTERFERENCE METHOD AND APPARATUS", which is incorporated herein by reference in its entirety.

### TECHNICAL FIELD

Embodiments of this application relate to the field of optical communication technologies, and in particular, to a lidar anti-interference method and apparatus.

### BACKGROUND

A lidar is a radar system that detects features such as a location and a speed of a target by emitting laser beams. A basic working principle is that the lidar emits a detection laser beam to the target, and then compares an emitted signal with a reflected signal received from the target, to obtain information such as a distance, an orientation, a height, a speed, a posture or a shape of the target based on a comparison result.

In reality, there are a plurality of interference sources that affect performance of the lidar, for example, sunlight, a malicious co-channel interference laser signal, and a plurality of lidars that do not collaboratively work but use a same laser wavelength. To resolve the interference problem of the lidar, a lidar anti-interference technology emerges. At present, a common anti-interference method of a pulse lidar is: pulse magnitude modulation, pulse width modulation, pulse time interval modulation, or the like, so as to emit a pulse signal carrying specific information. When the pulse signal is received, a corresponding specific pulse signal that meets the pulse amplitude modulation, the pulse width modulation, the time interval modulation, or the like, is selected from received signals as an echo signal of the pulse lidar. In consideration of safety of human eyes, laser emission power is limited, and therefore a signal-to-noise ratio of the received signal is limited. When the lidar is used in an environment with interference, an anti-interference capability cannot be improved by simply increasing the laser emission power. In this case, noise formed by an interference signal has great impact on the system, and consequently performance of lidar ranging is reduced.

### SUMMARY

Embodiments of this application disclose a lidar anti-interference method and apparatus, to improve an anti-interference capability of a lidar.

According to a first aspect, a lidar anti-interference apparatus is disclosed. The lidar anti-interference apparatus includes a control module, a laser, and a detector. The control module is configured to determine N first sequences and N groups of first time intervals, where N is an integer greater than or equal to 1. The laser is configured to emit N first laser signals based on the N first sequences and the N groups of first time intervals. The detector is configured to receive N second laser signals, and convert the N second laser signals into electrical signals, to obtain N first electrical signals. The control module is further configured to superimpose the N first electrical signals to obtain a first superimposed signal, and determine N second sequences and N groups of second time intervals based on the first superimposed signal.

In this embodiment of this application, sending time of a corresponding first sequence may be determined based on the first time interval, and interval lengths of the N groups of first time intervals are random. Therefore, a time length of sending time of signals corresponding to the N first sequences is random. After the detector receives the N second laser signals, the control module may superimpose corresponding electrical signals based on the N groups of first time intervals, to obtain the first superimposed signal. The first superimposed signal obtained through superimposing has a greater signal amplitude than a directly received signal, so that a signal-to-noise ratio can be increased. In addition, the sending time of the laser signal is random, so that accumulation of interference signals at a fixed frequency can be avoided. Therefore, noise in a point cloud image of the lidar can be reduced, and an anti-interference capability of the lidar can be improved.

In a possible implementation, the apparatus may further include a signal generator. The signal generator is configured to generate N second electrical signals based on the N first sequences and the N groups of first time intervals. That the laser emits N first laser signals based on the N first sequences and the N groups of first time intervals includes: The laser emits the N first laser signals based on the N second electrical signals.

In this embodiment of this application, after determining the first sequence and the first time interval, the control module may implement consistency between the first sequence and a sequence of the emitted first laser signal by using the signal generator, so that consistency between the first sequence and the sequence of the laser signal can be ensured. In addition, the signal generator can determine, by using the N groups of first time intervals, a length of a time interval for sending the N first laser signals, so that sending time of the first laser signal is random. When the control module superimposes signals, accumulation of interference signals at a fixed frequency can be avoided, so that a signal-to-interference ratio of the superimposed signals can be increased.

In a possible implementation, when the N first sequences are the same, that the control module superimposes the N first electrical signals to obtain a first superimposed signal includes: superimposing the N first electrical signals based on the N groups of first time intervals, to obtain a second superimposed signal; and filtering the second superimposed signal based on the N first sequences, to obtain the first superimposed signal.

In this embodiment of this application, the N first sequences are the same, that is, sequences of N sent laser signals are the same, but the N groups of first time intervals are random, and sending time of the laser signal is different, so that corresponding electrical signals may be superimposed to obtain the second superimposed signal. A signal amplitude of the superimposed signal is greatly improved through accumulation, and the sending time of the laser signal is random, so that accumulation of interference signals at a fixed frequency can be reduced. Further, because the second superimposed signal is formed by superimposing signals corresponding to a same sequence, filtering may be directly performed on the superimposed signal. Through filtering, not only impact of an interference signal can be further reduced, and anti-interference performance of the lidar can be improved, but also filtering times can be reduced, and an internal structure of the control module can be simplified.

In a possible implementation, when the N first sequences are different sequences, that the control module superimposes the N first electrical signals to obtain a first superimposed signal includes: filtering the N first electrical signals based on the N first sequences, to obtain N filtered signals; and superimposing the N filtered signals based on the N groups of first time intervals, to obtain the first superimposed signal.

In this embodiment of this application, the N first sequences are different sequences, that is, sequences of N sent laser signals are different laser sequences. Because the first superimposed signal is a superimposed signal of signals corresponding to different sequences, a probability that the lidar and another lidar use a same or similar sequence can be reduced, to avoid interference formed by a plurality of lidars using the same or similar sequence, and further improve an anti-interference capability of the lidar. Due to different sequences, signals corresponding to different sequences may be first filtered, and then superimposed to form the first superimposed signal, so that impact of an interference signal can be reduced, and anti-interference performance of the lidar is further improved.

In a possible implementation, the apparatus further includes a beam splitter, and the control module includes a filter. The beam splitter is configured to: receive N third laser signals, transmit N fourth laser signals, and reflect N fifth laser signals, where the third laser signal is a laser signal obtained after the first laser signal is transmitted to the beam splitter, and the third laser signal includes the fourth laser signal and the fifth laser signal. The detector is further configured to receive N sixth laser signals, and convert the N sixth laser signals into electrical signals, to obtain N third electrical signals, where the sixth laser signal is a laser signal obtained after the fifth laser signal is transmitted to the detector. That the control module filters the second superimposed signal based on the N first sequences, to obtain the first superimposed signal includes: The control module adjusts a filtering coefficient of the filter based on the N third electrical signals; and the filter filters the second superimposed signal based on the N first sequences, to obtain the first superimposed signal.

In this embodiment of this application, after the laser emits a laser signal, the emitted laser signal may be reflected and transmitted by the beam splitter, to form two laser signals with a same sequence. One laser signal may be emitted to a detected object, and the other laser signal may be directly emitted to the detector. After receiving the directly emitted signal, the detector may adjust a filtering coefficient of the filter. The filtering coefficients may respectively correspond to sequences that are actually sent. In this case, by adjusting the filtering coefficient, a problem that detection performance of the lidar is reduced due to internal interference of the apparatus can be avoided, so that an anti-interference capability of the lidar can be improved.

In a possible implementation, the apparatus further includes a beam splitter, and the control module includes a filter. The beam splitter is configured to: receive N third laser signals, transmit N fourth laser signals, and reflect N fifth laser signals, where the third laser signal is a laser signal obtained after the first laser signal is transmitted to the beam splitter, and the third laser signal includes the fourth laser signal and the fifth laser signal. The detector is further configured to receive N sixth laser signals, and convert the N sixth laser signals into electrical signals, to obtain N fourth electrical signals, where the sixth laser signal is a laser signal obtained after the fifth laser signal is transmitted to the detector. That the control module filters the N first electrical signals based on the N first sequences, to obtain N filtered signals includes: The control module adjusts a filtering coefficient of the filter based on the N fourth electrical signals; and the filter filters the second superimposed signal based on the N first sequences, to obtain the N filtered signals.

In this embodiment of this application, after the laser emits a laser signal, the emitted laser signal may be reflected and transmitted by the beam splitter, to form two laser signals with a same sequence. One laser signal may be emitted to a detected object, and the other laser signal may be directly emitted to the detector. After receiving the directly emitted signal, the detector may adjust a filtering coefficient of the filter. The filtering coefficients may respectively correspond to sequences that are actually sent. In this case, by adjusting the filtering coefficient, a problem that detection performance of the lidar is reduced due to internal interference of the apparatus can be avoided, so that an anti-interference capability of the lidar can be improved.

In a possible implementation, that the control module determines N second sequences and N groups of second time intervals based on the first superimposed signal includes: when a correlation peak exists between the N first sequences and the first superimposed signal, and a value of a main-to-sidelobe ratio of the correlation peak is greater than a first threshold, determining the N first sequences as the N second sequences, and determining the N groups of first time intervals as the N groups of second time intervals.

In this embodiment of this application, the control module may perform a cross-correlation operation on the first sequence and the first superimposed signal. When a correlation peak exists in a cross-correlation result, it may indicate that the first superimposed signal is an echo signal of a laser signal emitted corresponding to the first sequence. Further, when the value of the main main-to-sidelobe ratio of the correlation peak is greater than the first threshold, it may be determined that interference of the received echo signal is relatively small, and a detection requirement of the system can be met. When the detection requirement of the system can be met, the control module may determine that the N first sequences and the N groups of first time intervals are applicable to the current environment, that is, the N first sequences and the N groups of first time intervals may be determined as the N second sequences and the N groups of second time intervals. In this case, the current N first sequences and the current N groups of first time intervals are no longer adjusted, so that processing overheads of the control module can be reduced, and processing efficiency can be improved.

In a possible implementation, that the control module determines N second sequences and N groups of second time intervals based on the first superimposed signal further includes: when the correlation peak exists, and the value of the main-to-sidelobe ratio is less than or equal to the first threshold, increasing an interval length included in each of the N groups of first time intervals and/or increasing a quantity of intervals included in the N groups of first time intervals, to obtain N groups of first time intervals.

In this embodiment of this application, when a correlation peak exists in a result of the cross-correlation operation between the first sequence and the first superimposed signal, it indicates that there is a specific similarity between the N first sequences and the first superimposed signal, and the control module may determine that the first superimposed signal is an echo signal of the current N first sequences. Further, when the value of the main-to-sidelobe ratio of the correlation peak is less than a specific threshold, although it can be determined that the first superimposed signal is an echo signal of a sent first laser sequence, a given anti-interference requirement is not met. Therefore, the control module can increase the interval length and/or the quantity of first time intervals, that is, can increase emission time and/or a quantity of intervals for emitting a laser signal, and can further avoid accumulation of interference signals, so as to increase the signal-to-interference ratio, to improve an anti-interference capability of the lidar.

In a possible implementation, that the control module determines N second sequences and N groups of second time intervals based on the first superimposed signal further includes: when no correlation peak exists, adjusting the N first sequences to obtain N first sequences.

In this embodiment of this application, when there is no correlation peak between the first sequence and the first superimposed signal, the control module cannot determine that the first superimposed signal is an echo signal of a laser signal emitted corresponding to the first sequence. In this case, the laser signal may be interfered by another lidar. Therefore, the control module can adjust the current first sequence to reduce impact of an interference signal, so that an anti-interference capability of the lidar is improved.

In a possible implementation, that the control module determines N second sequences and N groups of second time intervals based on the first superimposed signal further includes: when the value of the main-to-sidelobe ratio is greater than a second threshold, decreasing an interval length in each of the N groups of first time intervals and/or decreasing a quantity of intervals in the N groups of first time intervals, to obtain N groups of first time intervals, where the second threshold is greater than the first threshold.

In this embodiment of this application, when the value of the main-to-sidelobe ratio is far greater than the second threshold, the interval length and the quantity of time intervals can be decreased, and processing overheads can be reduced on a premise that an anti-interference capability of the lidar meets the current environment. Therefore, processing efficiency of the control module can be improved and processing resources can be saved.

In a possible implementation, that the control module determines N second sequences and N groups of second time intervals based on the first superimposed signal further includes: when a signal-to-noise ratio of the first superimposed signal is greater than a third threshold, adjusting the N first sequences to obtain N first sequences.

In this embodiment of this application, when it is not determined that there is a specific similarity between the first superimposed signal and the N first sequences, the control module can determine whether specific signal accumulation exists in the first superimposed signal by determining the value of the signal-to-noise ratio of the first superimposed signal. Because signal accumulation exists but no correlation peak exists due to an interference signal in the environment, the control module can adjust the first sequence to improve an anti-interference capability of the lidar.

In a possible implementation, an interval length included in the N groups of second time intervals is less than or equal to a fourth threshold, and a quantity of intervals of the N groups of second time intervals is less than or equal to a fifth threshold.

In this embodiment of this application, in a process of adjusting a time interval, the interval length and the quantity of time intervals are increased, to improve an anti-interference capability and increase processing overheads. When the interval length and the quantity of time intervals are increased to a specific extent, an anti-interference capability of the lidar cannot be significantly improved by continuously increasing the interval length and the quantity of time intervals. Therefore, by setting upper limit of the interval length and the quantity of time intervals, not only can endless increase of the interval length and the quantity of time intervals be avoided to reduce waste of processing resources, but also processing efficiency can be improved.

According to a second aspect, a lidar anti-interference method is disclosed, and the method is applied to a lidar anti-interference apparatus. The method may include: determining N first sequences and N groups of first time intervals, where N is an integer greater than or equal to 1; emitting N first laser signals based on the N first sequences and the N groups of first time intervals; receiving N second laser signals, and converting the N second laser signals into electrical signals, to obtain N first electrical signals; superimposing the N first electrical signals to obtain a first superimposed signal; and determining N second sequences and N groups of second time intervals based on the first superimposed signal.

In this embodiment of this application, sending time of a corresponding first sequence may be determined based on the first time interval, and interval lengths of the N groups of first time intervals are random. Therefore, a time length of sending time of signals corresponding to the N first sequences is random. After the N second laser signals are received, corresponding electrical signals may be superimposed based on the N groups of first time intervals, to obtain the first superimposed signal. The first superimposed signal obtained through superimposing has a greater signal amplitude than a directly received signal, so that a signal-to-noise ratio can be increased. In addition, the sending time of the laser signal is random, so that noise accumulation can be avoided. Therefore, noise in a point cloud image of a lidar system can be reduced, and an anti-interference capability of a lidar can be improved.

In a possible implementation, the method may further include: generating N second electrical signals based on the N first sequences and the N groups of first time intervals; and the emitting N first laser signals based on the N first sequences and the N groups of first time intervals includes: emitting the N first laser signals based on the N second electrical signals.

In this embodiment of this application, after the first sequence and the first time interval are determined, the first sequence is consistent with a sequence of an emitted first laser signal, so that consistency between the first sequence and the sequence of the laser signal can be ensured. In addition, a length of a time interval for sending the N first laser signals can be determined by using the N groups of first time intervals, so that sending time of the first laser signal is random. When signals are superimposed, accumulation of interference signals at a fixed frequency can be avoided, so that a signal-to-interference ratio of the superimposed signals can be increased.

In a possible implementation, when the N first sequences are the same, the superimposing the N first electrical signals to obtain a first superimposed signal includes: superimposing the N first electrical signals based on the N groups of first time intervals, to obtain a second superimposed signal; and filtering the second superimposed signal based on the N first sequences, to obtain the first superimposed signal.

In this embodiment of this application, the N first sequences are the same, that is, sequences of N sent laser signals are the same, but the N groups of first time intervals are random, and sending time of the laser signal is different, so that corresponding electrical signals may be superimposed to obtain the second superimposed signal. A signal amplitude of the superimposed signal is greatly improved through accumulation, and the sending time of the laser signal is random, so that accumulation of interference signals at a fixed frequency can be reduced. Further, because the second superimposed signal is formed by superimposing signals corresponding to a same sequence, filtering may be directly performed on the superimposed signal. Through filtering, not only signal interference can be reduced, and anti-interference performance of the lidar can be improved, but also filtering times can be reduced, and an internal structure of the control module can be simplified.

In a possible implementation, when the N first sequences are different sequences, the superimposing the N first electrical signals to obtain a first superimposed signal includes: filtering the N first electrical signals based on the N first sequences, to obtain N filtered signals; and superimposing the N filtered signals based on the N groups of first time intervals, to obtain the first superimposed signal.

In this embodiment of this application, the N first sequences are different sequences, that is, sequences of N sent laser signals are different laser sequences. Because the first superimposed signal is a superimposed signal of signals corresponding to different sequences, a probability that the lidar and another lidar use a same or similar sequence can be reduced, to avoid interference formed by a plurality of lidars using the same or similar sequence, and further improve an anti-interference capability of the lidar. Due to different sequences, signals corresponding to different sequences may be first filtered, and then superimposed to form the first superimposed signal, so that impact of an interference signal can be reduced, and anti-interference performance of the lidar is further improved.

In a possible implementation, the method may further include: receiving N third laser signals, transmitting N fourth laser signals, and reflecting N fifth laser signals, where the third laser signal is a laser signal obtained after the first laser signal is transmitted to the beam splitter, and the third laser signal includes the fourth laser signal and the fifth laser signal; and receiving N sixth laser signals, and converting the N sixth laser signals into electrical signals, to obtain N third electrical signals, where the sixth laser signal is a laser signal obtained after the fifth laser signal is transmitted to the detector; and the filtering the second superimposed signal based on the N first sequences, to obtain the first superimposed signal includes: adjusting a filtering coefficient of the filter based on the N third electrical signals; and filtering the second superimposed signal based on the N first sequences, to obtain the first superimposed signal.

In this embodiment of this application, after a laser signal is emitted, the emitted laser signal may be reflected and transmitted, to form two laser signals with a same sequence. One laser signal may be emitted to a detected object, and the other laser signal may be directly emitted back. After the directly emitted signal is received, a filtering coefficient of the filter may be adjusted. The filtering coefficients may respectively correspond to sequences that are actually sent. In this case, by adjusting the filtering coefficient, a problem that detection performance of the lidar is reduced due to internal interference of the lidar can be avoided, so that an anti-interference capability of the lidar can be improved.

In a possible implementation, the method may further include: receiving N third laser signals, transmitting N fourth laser signals, and reflecting N fifth laser signals, where the third laser signal is a laser signal obtained after the first laser signal is transmitted to the beam splitter, and the third laser signal includes the fourth laser signal and the fifth laser signal; and receiving N sixth laser signals, and converting the N sixth laser signals into electrical signals, to obtain N fourth electrical signals, where the sixth laser signal is a laser signal obtained after the fifth laser signal is transmitted to the detector; and the filtering the N first electrical signals based on the N first sequences, to obtain N filtered signals includes: adjusting a filtering coefficient of the filter based on the N fourth electrical signals; and filtering the second superimposed signal based on the N first sequences, to obtain the N filtered signals.

In this embodiment of this application, after a laser signal is emitted, the emitted laser signal may be reflected and transmitted, to form two laser signals with a same sequence. One laser signal may be emitted to a detected object, and the other laser signal may be directly emitted back. After the directly emitted signal is received, a filtering coefficient of the filter may be adjusted. The filtering coefficients may respectively correspond to sequences that are actually sent. In this case, by adjusting the filtering coefficient, a problem that detection performance of the lidar is reduced due to internal interference of the lidar can be avoided, so that an anti-interference capability of the lidar can be improved.

In a possible implementation, the determining N second sequences and N groups of second time intervals based on the first superimposed signal includes: when a correlation peak exists between the N first sequences and the first superimposed signal, and a value of a main-to-sidelobe ratio of the correlation peak is greater than a first threshold, determining the N first sequences as the N second sequences, and determining the N groups of first time intervals as the N groups of second time intervals.

In this embodiment of this application, a cross-correlation operation may be performed on the first sequence and the first superimposed signal. When a correlation peak exists in a cross-correlation result, it may indicate that the first superimposed signal is an echo signal of a laser signal emitted corresponding to the first sequence. Further, when the value of the main main-to-sidelobe ratio of the correlation peak is greater than the first threshold, it may be determined that interference of the received echo signal is relatively small, and a detection requirement of the lidar can be met. When the detection requirement of the lidar can be met, it may be determined that the N first sequences and the N groups of first time intervals are applicable to the current environment, that is, the N first sequences and the N groups of first time intervals may be determined as the N second sequences and the N groups of second time intervals. In this case, the current N first sequences and the current N groups of first time intervals are no longer adjusted, so that processing overheads can be reduced, and processing efficiency can be improved.

In a possible implementation, the determining N second sequences and N groups of second time intervals based on the first superimposed signal further includes: when the correlation peak exists, and the value of the main-to-sidelobe ratio is less than or equal to the first threshold, increasing an interval length included in each of the N groups of first time intervals and/or increasing a quantity of intervals included in the N groups of first time intervals, to obtain N groups of first time intervals.

In this embodiment of this application, when a correlation peak exists in a result of the cross-correlation operation between the first sequence and the first superimposed signal, it indicates that there is a specific similarity between the N first sequences and the first superimposed signal, and the first superimposed signal may be determined as an echo signal of the current N first sequences. Further, when the value of the main-to-sidelobe ratio of the correlation peak is less than a specific threshold, although it can be determined that the first superimposed signal is an echo signal of a sent first laser sequence, a given anti-interference requirement is not met. Therefore, the interval length and/or the quantity of first time intervals can be further increased, that is, emission time and/or a quantity of intervals for emitting a laser signal can be increased, and accumulation of interference signals can be further avoided, so as to increase the signal-to-interference ratio, to improve an anti-interference capability of the lidar.

In a possible implementation, the determining N second sequences and N groups of second time intervals based on the first superimposed signal further includes: when no correlation peak exists, adjusting the N first sequences to obtain N first sequences.

In this embodiment of this application, when there is no correlation peak between the first sequence and the first superimposed signal, it cannot be determined that the first superimposed signal is an echo signal of a laser signal emitted corresponding to the first sequence. In this case, the laser signal may be interfered by another lidar. Therefore, the current first sequence can be adjusted to reduce impact of an interference signal, so that an anti-interference capability of the lidar is improved.

In a possible implementation, the determining N second sequences and N groups of second time intervals based on the first superimposed signal further includes: when the value of the main-to-sidelobe ratio is greater than a second threshold, decreasing an interval length in each of the N groups of first time intervals and/or decreasing a quantity of intervals in the N groups of first time intervals, to obtain N groups of first time intervals, where the second threshold is greater than the first threshold.

In this embodiment of this application, when the value of the main-to-sidelobe ratio is far greater than the second threshold, the interval length and the quantity of time intervals can be decreased, and processing overheads can be reduced on a premise that an anti-interference capability meets the current environment. Therefore, processing efficiency can be improved, and processing resources can be saved.

In a possible implementation, the determining N second sequences and N groups of second time intervals based on the first superimposed signal further includes: when a signal-to-noise ratio of the first superimposed signal is greater than a third threshold, adjusting the N first sequences to obtain N first sequences.

In this embodiment of this application, when it is not determined that there is a specific similarity between the first superimposed signal and the N first sequences, whether specific signal accumulation exists in the first superimposed signal can be determined by determining a value of the signal-to-noise ratio of the first superimposed signal. Because signal accumulation exists but no correlation peak exists due to an interference signal in the environment, the first sequence can be adjusted to improve an anti-interference capability of the lidar.

In a possible implementation, an interval length included in the N groups of second time intervals is less than or equal to a fourth threshold, and a quantity of intervals of the N groups of second time intervals is less than or equal to a fifth threshold.

In embodiments of this application, in a process of adjusting a time interval, the interval length and the quantity of time intervals are increased, to improve an anti-interference capability and increase processing overheads. When the interval length and the quantity of time intervals are increased to a specific extent, an anti-interference capability of the lidar cannot be significantly improved by continuously increasing the interval length and the quantity of time intervals. Therefore, by setting upper limit of the interval length and the quantity of time intervals, not only can endless increase of the interval length and the quantity of time intervals be avoided to reduce waste of processing resources, but also processing efficiency can be improved.

### BRIEF DESCRIPTION OF DRAWINGS

FIG. 1 is a schematic diagram of an application scenario of a lidar according to an embodiment of this application;
FIG. 2 is a schematic diagram of a laser pulse according to an embodiment of this application;
FIG. 3 is a schematic diagram of a structure of a lidar anti-interference apparatus according to an embodiment of this application;
FIG. 4 is a schematic diagram of a signal superimposing method according to an embodiment of this application;
FIG. 5 is a schematic diagram of a structure of another lidar anti-interference apparatus according to an embodiment of this application;
FIG. 6A and FIG. 6B are a schematic flowchart of a signal anti-interference policy method according to an embodiment of this application;
FIG. 7 is a schematic diagram of a cross-correlation operation method according to an embodiment of this application;
FIG. 8 is a schematic diagram of a structure of still another lidar anti-interference apparatus according to an embodiment of this application; and
FIG. 9 is a schematic flowchart of a lidar anti-interference method according to an embodiment of this application.

### DESCRIPTION OF EMBODIMENTS

Embodiments of this application disclose a lidar anti-interference method and apparatus, to improve an anti-interference capability of a lidar. Details are separately described in the following.

To better understand the lidar anti-interference method and apparatus disclosed in embodiments of this application, the following first describes related technologies in embodiments of this application.

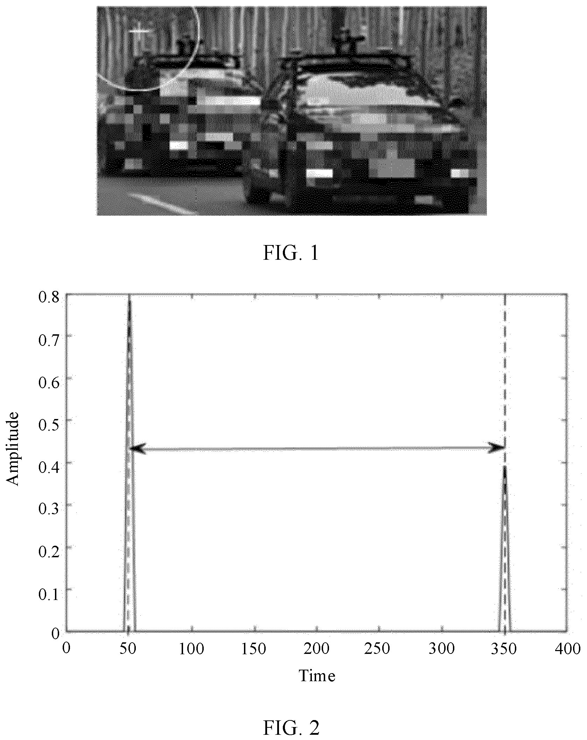

Light detection and ranging (light detection and ranging, LiDAR) systems are widely used in the fields of automobile assisted driving or self-driving, service robots and industrial automation. In an actual application scenario, there are a plurality of interference sources of the lidar. FIG. 1 is a schematic diagram of an application scenario of a lidar according to an embodiment of this application. As shown in FIG. 1, with popularization of vehicle-mounted lidars, a phenomenon of interference to the lidar becomes increasingly serious. This may not only affect performance of the LiDAR system itself, such as ranging, but also affect performance of other systems. For example, in the Internet of Vehicles, when the lidar is interfered, a function of an advanced driver assistance system (advanced driver assistance system, ADAS) is also interfered.

The lidar can be classified as a pulsed lidar and a continuous wave lidar based on emission waveforms of laser light. FIG. 2 is a schematic diagram of a laser pulse. As shown in FIG. 2, time intervals and amplitudes of a group of emitted laser pulses may be adjusted, so that each lidar carries specific information. For example, a transmitted pulse signal may include two pulses. An amplitude of a first pulse may be different from an amplitude of a second pulse, and amplitudes of the first pulse and the second pulse are fixed. A time interval between the two pulses may also be fixed. After receiving a reflected laser signal, a pulse amplitude of the received laser signal and a time interval between the laser pulses can be detected. When an amplitude value of the received laser signal is correspondingly equal to an amplitude value of an emitted laser signal, and a time interval between pulses of the received laser signal is correspondingly the same as a time interval between pulses of the emitted laser signal, it may be determined that the received laser signal is an echo signal that is of the emitted laser signal and that is reflected by a detected object. The echo signal may be understood as a received laser signal of which a corresponding signal feature has a specific similarity with a signal feature of the emitted signal and that is determined by detecting the corresponding signal feature (for example, the pulse amplitude and the time interval between pulses).

When the lidar emits a laser signal to the detected object, in order to ensure human eye security, laser transmission power needs to be limited. This limits both a signal-to-noise ratio of the received echo signal and a ranging capability of the lidar. Because an interference signal has great impact on the lidar, how to further improve the anti-interference capability of the lidar is an urgent problem to be resolved.

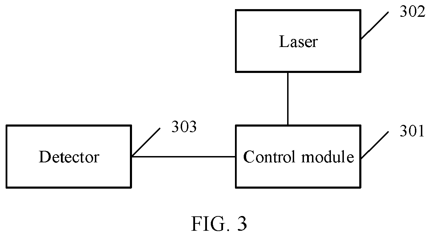

FIG. 3 is a schematic diagram of a structure of a lidar anti-interference apparatus according to an embodiment of this application. As shown in FIG. 3, the lidar anti-interference apparatus may include a control module 301, a laser 302, and a detector 303.

The control module 301 is configured to determine N first sequences and N groups of first time intervals, where N is an integer greater than or equal to 1.

The laser 302 is configured to emit N first laser signals based on the N first sequences and the N groups of first time intervals.

The detector 303 is configured to: receive N second laser signals, and convert the N second laser signals into electrical signals, to obtain N first electrical signals.

The control module 301 is further configured to: superimpose the N first electrical signals to obtain a first superimposed signal; and determine N second sequences and N groups of second time intervals based on the first superimposed signal.

When an ambient environment needs to be detected by using a lidar, the control module 301 may determine N first sequences and N groups of first time intervals. The control module 301 may generate the N first sequences by generating a random sequence, or may select the N first sequences from stored sequences, or may adjust previously used first sequences to obtain the N first sequences, or may continuously use previously used first sequences as the current N first sequences. It should be understood that the foregoing is an example of how to determine the first sequence, and a specific determining manner of the first sequence is not limited. The first sequence may be a sequence representing a pulse-type laser signal. N is an integer greater than or equal to 1. In a case, all of the N first sequences may be the same. In another case, all of the N first sequences may be different, or may be partially the same or partially different. One first sequence may include a non-zero value, for example, "1", or may include a plurality of non-zero values, such as "10111001".

The control module 301 may determine the N groups of first time intervals by generating a random number, or may determine the N groups of first time intervals based on a preset random sequence, or may adjust previously used first time intervals to obtain the N groups of first time intervals, or may continuously use previously used first time intervals as the current N groups of first time intervals. It should be understood that the foregoing is an example of generating N groups of random first time intervals, and does not constitute a limitation on a specific manner of generating the random time interval. The first time interval represents a time interval between two groups of laser signals. The N groups of first time intervals may be time intervals of random time lengths. Each of the N groups of first time intervals may be the same, or may be different, or may be partially the same or partially different.

After determining the N first sequences and the N groups of first time intervals, the control module 301 may send the N first sequences and the N groups of first time intervals to the laser 302. After receiving the N first sequences and the N groups of first time intervals, the laser 302 may emit N first laser signals based on the N first sequences and the N groups of first time intervals. The first laser signal may be a pulse-type laser signal, and a sequence of the first laser signal may be correspondingly consistent with the first sequence. That is, it may be understood that sequences of the N first laser signals may be determined by using the N first sequences, and time for emitting every two adjacent first laser signals of the N first laser signals may be determined by using the N groups of first time intervals. For example, a sequence of a 1^{st} first laser signal emitted by the laser 302 is consistent with a 1^{st} first sequence (If the first sequence is "1010", a sequence corresponding to the first laser signal is also "1010"), a sequence of a 2^{nd} first laser signal is consistent with a 2^{nd} first sequence, ..., and a sequence of an N^{th} first laser signal is consistent with an N^{th} first sequence. The laser 302 may calculate, based on the N groups of first time intervals, start time of emitting each first laser signal. For example, a group of first time intervals may represent a time interval between two first laser signals that are successively transmitted. For example, a sequence of the 1^{st} first laser signal is "1010", a sequence of the 2^{nd} first laser signal is "0101 ", and a first time interval may indicate an interval length between time for emitting a first sequence "1" in "1010" and time for emitting a first sequence "0" in "0101". When determining, by using a (N-1)^{th} first time interval, start time of emitting the N^{th} first laser signal, the laser may further determine, end time of emitting the N^{th} first laser signal by using an N^{th} first time interval.

In a case in which the laser 302 emits the laser signal, the detector 303 may detect a reflected signal of the laser signal emitted by the laser 302. Therefore, after the laser 302 emits the N first laser signals based on the N first sequences and the N groups of first time intervals, the detector 303 may receive N second laser signals. The second laser signal may include a laser signal obtained after the first laser signal is reflected by a detected object, or may include an interference signal, or may include an interference signal and a laser signal obtained after the first laser signal is reflected by the detected object. The interference signal may include another laser signal that may be received by the detector 303, and that is reflected by the detected object from a non-first laser signal. Then, the detector 303 may convert the N second laser signals into electrical signals to obtain N first electrical signals, and may send the N first electrical signals to the control module 301.

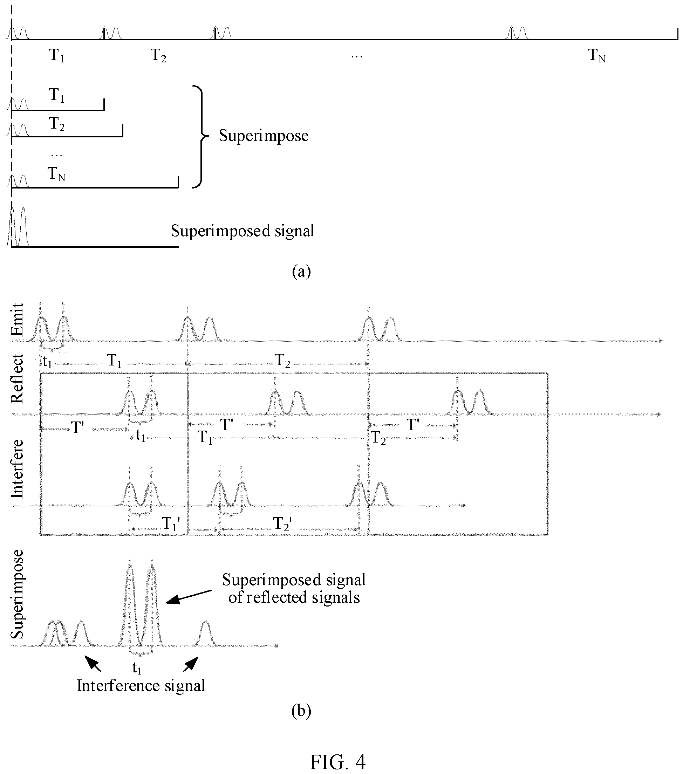

After receiving the N first electrical signals from the detector 303, the control module 301 may superimpose the N first electrical signals to obtain a first superimposed signal. FIG. 4 is a schematic diagram of a signal superimposing method according to an embodiment of this application. As shown in FIG. 4, an interval length of a first group of first time intervals is *T*₁, an interval length of a second group of first time intervals is *T*₂, ..., and an interval length of an N^{th} group of first time intervals is *T_{N}.* The control module 301 may correspondingly superimpose the N first electrical signals in time intervals corresponding to *T*₁, *T*₂, ..., and *T_{N}.* For example, as shown in (a) in FIG. 4, the control module 301 may detect sequences of the N first electrical signals. The control module 301 may superimpose the N first electrical signals based on start time and the N groups of first time intervals *T*₁, *T*₂, ..., and *T_{N},* to obtain the first superimposed signal. As shown in (b) in FIG. 4, an interference signal may exist in reflected signals, that is, the received N second laser signals may be signals obtained by combining N interference signals and laser signals obtained after the N first laser signals are reflected by the detected object. That is, interference may exist in the N first electrical signals received by the control module 301. The control module 301 may obtain one superimposed signal after superimposing the corresponding N first electrical signals. Interference may exist in the superimposed signal obtained by the control module 301. However, because time lengths from T₁ and T₂ to T_{N} are random, accumulation of interference signals can be avoided to a specific extent. In addition, compared with a signal that is not superimposed, the superimposed signal has an increase in an amplitude corresponding to the first sequence, and therefore a relatively large signal-to-interference ratio may be generated, and an anti-interference capability of the lidar can be improved. It should be noted that the control module 301 may perform filtering in a process of superimposing the N first electrical signals, and a signal obtained after filtering and superimposition is the first superimposed signal.

After obtaining the first superimposed signal, the control module 301 may perform a cross-correlation operation based on the obtained first superimposed signal and the known first sequence, to determine whether the first superimposed signal is a reflected echo signal that includes a laser signal emitted based on the first sequence. The control module 301 may determine the N second sequences and the N groups of second time intervals based on whether the echo signal includes the emitted laser signal.

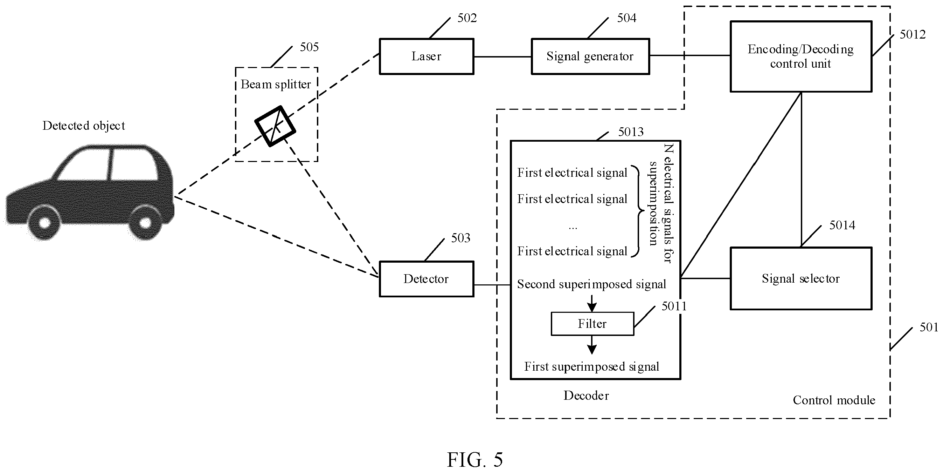

FIG. 5 is a schematic diagram of a structure of another lidar anti-interference apparatus disclosed in an embodiment of this application. The lidar anti-interference apparatus shown in FIG. 5 is obtained by optimizing the lidar anti-interference apparatus shown in FIG. 3. As shown in FIG. 5, the lidar anti-interference apparatus may include a control module 501, a laser 502, and a detector 503.

For detailed descriptions, refer to related descriptions corresponding to FIG. 3.

In an embodiment, the lidar anti-interference apparatus may further include a signal generator 504.

The signal generator 504 is configured to generate N second electrical signals based on N first sequences and N groups of first time intervals.

That the laser 502 is configured to emit N first laser signals based on the N first sequences and the N groups of first time intervals includes:
The laser 502 emits the N first laser signals based on the N second electrical signals.

The signal generator 504 may be separately coupled to the control module 501 and the laser 502. The control module 501 may send the determined N first sequences and N groups of first time intervals to the signal generator 504. After receiving the N first sequences and the N groups of first time intervals, the signal generator 504 may generate the N second electrical signals based on the N first sequences and the N groups of first time intervals. That is, the signal generator 504 may determine sequences of the N second electrical signals based on the N first sequences, and may determine time intervals between the N second electrical signals based on the N groups of first time intervals. A sequence of each of the N second electrical signals may be determined by using the N first sequences, and an emitting start point corresponding to each sequence of the N second electrical signals may be determined by using N groups of time intervals. For example, a sequence of a 1^{st} second electrical signal generated by the signal generator 504 is the same as a 1^{st} first sequence, and a sequence of a 2^{nd} second electrical signal is the same as a 2^{nd} first sequence. In addition, a time interval between start time for emitting, by the signal generator 504, the 1^{st} second electrical signal and start time for emitting, by the signal generator 504, the 2^{nd} second electrical signal is a 1^{st} first time interval, ..., a time interval between start time of a (N-1)^{th} second electrical signal and start time of an N^{th} second electrical signal is a (N-1)^{th} first time interval, and a time interval between the start time and end time of the N^{th} second electrical signal is an N^{th} first time interval. Further, the laser 502 may transmit the N first laser signals based on the N second electrical signals. It may be understood that sequences of the N first laser signals are the same as sequences of the N second electrical signals. A time interval between two adjacent first laser signals is the same as a time interval between two corresponding adjacent second electrical signals, and a time interval between start time and end time of a last first laser signal is the same as a time interval between start time and end time of a last second electrical signal.

In an embodiment, when the N first sequences are the same, that the control module 501 superimposes the N first electrical signals to obtain a first superimposed signal includes:
superimposing the N first electrical signals based on the N groups of first time intervals, to obtain a second superimposed signal; and
filtering the second superimposed signal based on the N first sequences, to obtain the first superimposed signal.

After receiving N second laser signals, the detector 503 may convert the N second laser signals into electrical signals, to obtain the N first electrical signals. For detailed descriptions of the second laser signal, refer to related descriptions in FIG. 3. The detector 503 may send the N first electrical signals to the control module 501. The control module 501 may include a filter 5011. When the N first sequences are the same, after receiving the N first electrical signals, the control module 501 may first superimpose the N first electrical signals based on the N groups of first time intervals, to obtain the second superimposed signal, and then may filter the second superimposed signal based on the N first sequences, to obtain the first superimposed signal. For a specific superimposing method, refer to the methods corresponding to FIG. 4 and FIG. 5. Details are not described herein again. The control module 501 may determine a filtering coefficient of the filter based on the first sequence, and then may filter the second superimposed signal by using the filter, to obtain the first superimposed signal. The control module 501 may first determine the N first sequences, and may determine the filtering coefficient of the filter based on the first sequences. For example, when the first sequences are the same, it is assumed that the sequence is "1010", and the control module 501 may set the filtering coefficient to "1010". Certainly, another filtering coefficient may alternatively be set as required. After filtering is performed, an interference signal and noise can be removed, so that a signal-to-noise ratio of the superimposed signal can be further increased, and an anti-interference capability of the lidar can be improved.

It should be understood that the control module 501 may include a decoder 5013, and the foregoing control module 501 may superimpose the N first electrical signals to obtain the first superimposed signal by the decoder 5013.

In an embodiment, the lidar anti-interference apparatus may further include a beam splitter 505, and the control module 501 may include a filter 5011.

The beam splitter 505 is configured to: receive N third laser signals, transmit N fourth laser signals, and reflect N fifth laser signals. The third laser signal is a laser signal obtained after the first laser signal is transmitted to the beam splitter. The third laser signal includes the fourth laser signal and the fifth laser signal.

The detector 503 is further configured to: receive N sixth laser signals, and convert the N sixth laser signals into electrical signals, to obtain N third electrical signals. The sixth laser signal is a laser signal obtained after the fifth laser signal is transmitted to the detector.

That the control module 501 filters the second superimposed signal based on the N first sequences, to obtain the first superimposed signal includes:
The control module 501 adjusts a filtering coefficient of the filter 5011 based on the N third electrical signals.

The filter 5011 filters the second superimposed signal based on the N first sequences, to obtain the first superimposed signal.

The laser 502 may send the N first laser signals to the beam splitter 505, and the beam splitter 505 may receive the N third laser signals. After receiving the N third laser signals, the beam splitter 505 may transmit the N fourth laser signals, and may reflect the N fifth laser signals. The third laser signal may be a laser signal obtained after the first laser signal is transmitted to the beam splitter 505. The third laser signal may include the fourth laser signal and the fifth laser signal. In other words, it may be understood that the beam splitter 505 may transmit and reflect the N third laser signals, to obtain the N fourth laser signals and the N fifth laser signals. Then, the beam splitter 505 may transmit the N fourth laser signals to a detected object, and may directly send the N fifth laser signals to the detector 503. Then, the detector 503 may receive the N second laser signals, and convert the N second laser signals into electrical signals, to obtain the N first electrical signals. The detector 503 may further receive N sixth laser signals, and the N sixth laser signals may be laser signals obtained after the N fifth laser signals are transmitted to the detector 503. Then, the detector 503 may convert the N sixth laser signals into electrical signals, to obtain the N third electrical signals.

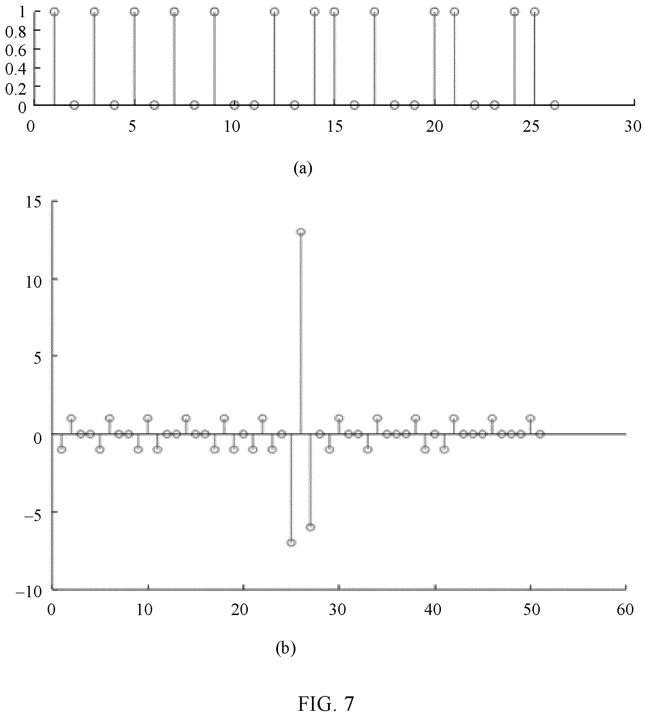

After receiving the N third electrical signals from the detector 503, the control module 501 may determine the filtering coefficient of the filter 5011 based on the N third electrical signals. The control module 501 may filter a superimposed signal (namely, the second superimposed signal) of the N first electrical signals, to obtain a first superimposed signal. The control module 501 may determine the filtering coefficient based on the N third electrical signals. The control module 501 may adjust the filtering coefficient of the filter 5011 based on a same sequence corresponding to the N third electrical signals. After the filtering coefficient is determined, the control module 501 may perform filtering on the second superimposed signal. For a detailed filtering method, refer to related descriptions in FIG. 7. Details are not described herein again. It should be understood that, after being reflected and transmitted by the beam splitter 505, the fifth laser signal may be directly sent to the detector 503 without being sent to the detected object. The detector 503 may directly receive the N sixth laser signals, and may determine the N third electrical signals based on the laser signals emitted by the laser 502. The control module 501 may determine, based on the N third electrical signals, sequences of the emitted N first laser signals. In this case, even if interference occurs inside the control module 501, the signal generator 504, and the laser 502, because the coefficient of the filter is readjusted based on the N third electrical signals, the control module 501 can improve a probability of correctly performing superimposition and filtering on the N first electrical signals. Thus, an anti-interference capability of the lidar apparatus can be improved.

It should be understood that, generally, the detector 501 should first receive the sixth laser signal and then receive the second laser signal. However, a special case is not excluded. Therefore, a sequence of receiving the sixth laser signal and the second laser signal by the detector 504 is not limited herein.

In an embodiment, that the control module 501 determines N second sequences and N groups of second time intervals based on the first superimposed signal includes:
when a correlation peak exists between the N first sequences and the first superimposed signal, and a value of a main-to-sidelobe ratio of the correlation peak is greater than a first threshold, determining the N first sequences as the N second sequences, and determining the N groups of first time intervals as the N groups of second time intervals.

In an embodiment, that the control module 501 determines N second sequences and N groups of second time intervals based on the first superimposed signal further includes:
when a correlation peak exists, and a value of a main-to-sidelobe ratio is less than or equal to a first threshold, increasing an interval length included in each of the N groups of first time intervals and/or increasing a quantity of intervals included in the N groups of first time intervals, to obtain N groups of new first time intervals.

In an embodiment, that the control module 501 determines N second sequences and N groups of second time intervals based on the first superimposed signal further includes:
when the value of the main-to-sidelobe ratio is greater than a second threshold, decreasing an interval length in each of the N groups of first time intervals and/or decreasing a quantity of intervals in the N groups of first time intervals, to obtain N groups of new first time intervals, where the second threshold is greater than the first threshold.

In an embodiment, that the control module 501 determines N second sequences and N groups of second time intervals based on the first superimposed signal further includes:
when no correlation peak exists, adjusting the N first sequences to obtain new N first sequences.

In an embodiment, that the control module 501 determines N second sequences and N groups of second time intervals based on the first superimposed signal further includes:
when a signal-to-noise ratio of the first superimposed signal is greater than a third threshold, adjusting the N first sequences, to obtain N first sequences.

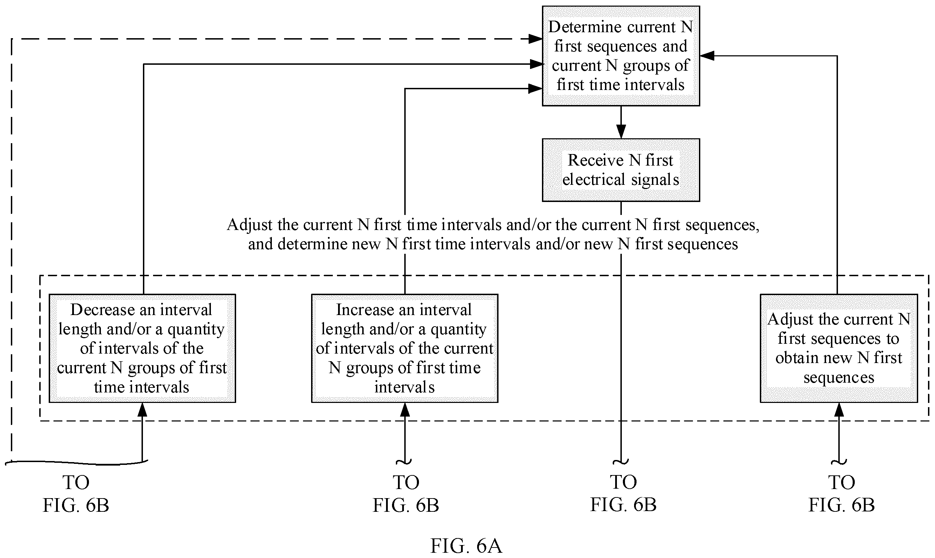

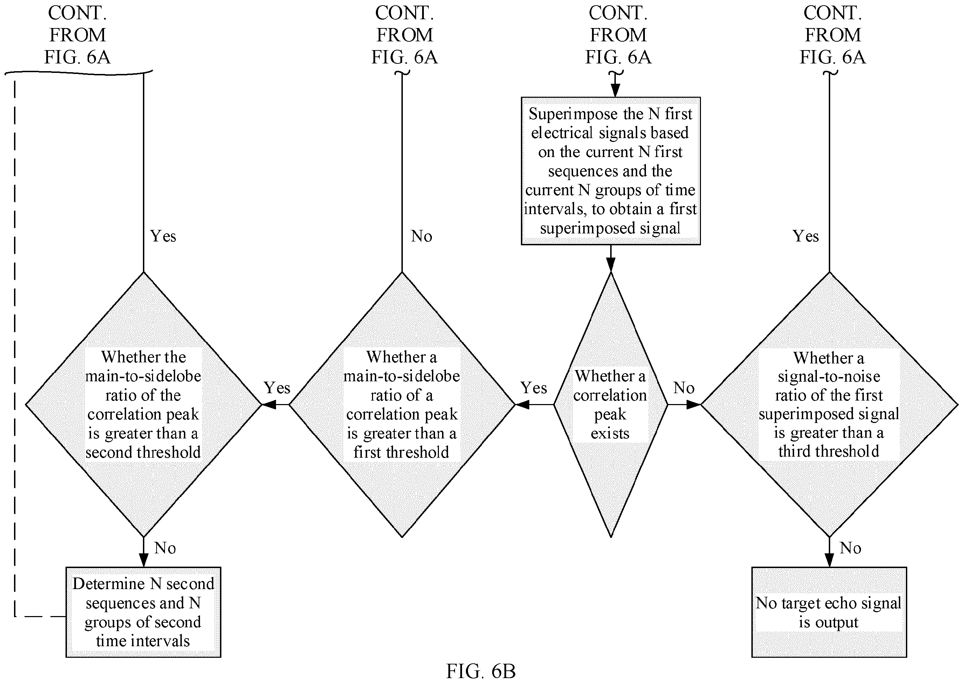

FIG. 6A and FIG. 6B are a schematic flowchart of a signal anti-interference policy method according to an embodiment of this application. As shown in FIG. 6A, the control module 501 may first determine current N first sequences and current N groups of first time intervals. After the control module 501 receives N first electrical signals (and may further receive N third electrical signals), the control module 501 may perform superimposition and filtering on the N first electrical signals to obtain a first superimposed signal. Then, the control module 501 may determine whether a correlation peak exists between the first superimposed signal and the current first sequence. When determining that the correlation peak exists, the control module 501 may continue to determine whether a value of a main-to-sidelobe ratio of the correlation peak is greater than a first threshold. When determining that the value of the main-to-sidelobe ratio of the correlation peak is greater than the first threshold, the control module 501 may determine N second sequences and N groups of second time intervals. Further, the control module 501 may determine the first superimposed signal as a target echo signal, and output the target echo signal. In a case, when determining that the value of the main-to-sidelobe ratio of the correlation peak is greater than the first threshold, the control module 501 may determine the current N first sequences as the N second sequences, determine the current N groups of first time intervals as the N groups of second time intervals, and output the target echo signal. In another case, when determining that the value of the main-to-sidelobe ratio of the correlation peak is greater than the first threshold, the control module 501 may continue to determine whether the value of the main-to-sidelobe ratio of the correlation peak is greater than a second threshold. When determining that the value of the main-to-sidelobe ratio of the correlation peak is less than or equal to the second threshold, the control module 501 may determine the current N first sequences as the N second sequences, determine the current N groups of first time intervals as the N groups of second time intervals, and output the target echo signal. The second threshold is greater than the first threshold.

When determining that the value of the main-to-sidelobe ratio of the correlation peak is less than or equal to the first threshold, the control module 501 may adjust the current N groups of first time intervals. When determining that the value of the main-to-sidelobe ratio of the correlation peak is greater than the second threshold, the control module 501 may adjust the current N groups of first time intervals. When determining that no correlation peak exists, the control module 501 may continue to determine whether a signal-to-noise ratio of the first superimposed signal is greater than a third threshold. When determining that the signal-to-noise ratio is greater than the third threshold, the control module 501 may adjust the current N first sequences. When it is determined that the signal-to-noise ratio is less than or equal to the third threshold, it may indicate that the second laser signal does not include an echo signal of a first laser signal. In this case, the target echo signal may not be output. The correlation peak may be a correlation peak obtained by the control module 501 by performing cross-correlation on the current N first sequences and the first superimposed signal. In a possible case, FIG. 7 is a schematic diagram of a cross-correlation operation method according to an embodiment of this application, where (a) in FIG. 7 shows the first superimposed signal. The control module 501 may perform a cross-correlation operation on the first superimposed signal and the N first sequences. It can be learned from (b) in FIG. 7 that a correlation peak may exist in a cross-correlation operation result. When the correlation peak exists between the current first sequence and the first superimposed signal, it may be reflected that the first sequence is sufficiently similar to the first superimposed signal, and the control module 501 may determine that the first superimposed signal is an echo signal corresponding to the N first sequences. Further, when the value of the main-to-sidelobe ratio of the correlation peak is greater than the first threshold, it may indicate that the echo signal can meet a system requirement, and the first superimposed signal may be output as the selected target echo signal.

The first threshold may be variable. For example, the control module 501 may adjust the first threshold based on the signal-to-noise ratio of the first superimposed signal, or may adjust the first threshold based on the value of the main-to-sidelobe ratio of the correlation peak, or may set the first threshold according to a system requirement, or may set the first threshold by using another method. Alternatively, the first threshold may be fixed, that is, may be a preset value. It should be understood that the foregoing is merely an example of a method for determining the first threshold, and constitutes no limitation.

The second threshold may be variable. For example, the control module 501 may adjust the second threshold based on an absolute value of a difference between a main-to-sidelobe ratio of a correlation peak corresponding to a previous first superimposed signal and a main-to-sidelobe ratio of a correlation peak corresponding to the current first superimposed signal. When the absolute value of the difference is greater than a sixth threshold, it indicates that a value of the main-to-sidelobe ratio of the correlation peak corresponding to the previous first superimposed signal is greatly different from a value of the main-to-sidelobe ratio of the correlation peak corresponding to the current first superimposed signal. The control module 501 may increase the second threshold. When the absolute value of the difference is less than or equal to the sixth threshold, it indicates a value of the main-to-sidelobe ratio of the correlation peak corresponding to the previous first superimposed signal is slightly different from a value of the main-to-sidelobe ratio of the correlation peak corresponding to the current first superimposed signal. The control module 501 may decrease the second threshold or keep the second threshold unchanged. Alternatively, the second threshold may be fixed.

The third threshold may be variable, or may be fixed. The control module 501 may set the third threshold as a fixed value, or may adjust the third threshold based on the signal-to-noise ratio of the first superimposed signal or the value of the main-to-sidelobe ratio of the correlation peak, or the like.

Before determining whether a correlation peak exists, the control module 501 may first perform dynamic threshold detection on the first superimposed signal. The control module 501 may determine a threshold value, and then may first determine whether an amplitude value of the first superimposed signal is greater than the threshold value. When determining that the amplitude value is greater than the threshold value, the control module 501 may continue to determine whether a correlation peak exists. When it is determined that the amplitude value is less than or equal to the threshold value, the first superimposed signal may be discarded. The threshold value may dynamically change. The dynamic threshold value may be determined based on a channel condition. For example, when the signal-to-noise ratio is less than or equal to a seventh threshold, the threshold value may be decreased. When the signal-to-noise ratio is greater than the seventh threshold, the threshold value may be increased. This threshold value may alternatively be determined based on an amplitude of another received signal. It should be understood that the foregoing is merely an example of determining the dynamic threshold value, and constitutes no limitation on a specific determining method.

When determining that the value of the main-to-sidelobe ratio of the correlation peak is less than or equal to the first threshold, the control module 501 may increase an interval length and/or a quantity of intervals of the current N groups of first time intervals, and determine N groups of new first time intervals. That is, it may be understood that a time interval between two first laser signals that are successively emitted may be increased, and/or a quantity of sent first laser signals may be increased (that is, a value of N is increased). In a case, the interval length and/or the quantity of intervals that are/is increased each time may be the same. The control module 501 may increase the interval length and/or the quantity of first time intervals based on a step size. The control module 501 may preset a step size a of the interval length, and a step size b of the quantity of intervals, where both a and b are greater than 0. It is assumed that an interval length of one of the current N groups of first time intervals is a1, and a quantity of intervals of the current N groups of first time intervals is b1. When the group of first time intervals needs to be increased, an interval length of a group of new first time intervals corresponding to the group of first time intervals may be a2, and a new quantity of intervals may be b2. It should be understood that the interval length of the new group of first time intervals corresponding to the group of first time intervals and the new quantity of intervals may be a2=a1+a, and b2=b1, or may be a2=a1, and b2=b1+b, or may be a2=a1+a, and b2=b1+b. In another case, the interval length and/or the quantity of intervals that are/is increased each time may be the different. The control module 501 may increase the interval length and/or the quantity of time intervals based on an absolute value of a difference between a value of a main-to-sidelobe ratio of the current correlation peak and the first threshold. When the absolute value of the difference between the first threshold and the value of the main-to-sidelobe ratio of the correlation peak is relatively large, an amplitude of increasing the interval length and/or the quantity of first time intervals by the control module 501 may be relatively large. For example, an increasing linear function (like *y* = *x*, x is the absolute value of the difference between the first threshold and the value of the main-to sidelobe ratio of the correlation peak, and y is an increased interval length or quantity of first time intervals) or a quadratic function *y* = *x*², where x is greater than zero, and the like, may be set. The control module 501 may further increase the interval length and/or the quantity of first time intervals in another manner. A specific increase manner is not limited herein. Increasing the interval length of the first time interval may reduce a probability that interference signals are accumulated in a superimposing process, and increasing the quantity of first time intervals may increase an amplitude of a superimposed signal. This may increase the signal-to-noise ratio of the first superimposed signal, and further improve an anti-interference capability of a lidar apparatus.

When determining that the value of the main-to-sidelobe ratio of the correlation peak is greater than the second threshold, the control module 501 may decrease an interval length of each of the current N groups of first time intervals and/or decrease a quantity of intervals of the current N groups of first time intervals, to obtain N groups of new first time intervals. That is, it may be understood that a time interval between two first laser signals that are successively emitted may be decreased, and/or a quantity of sent first laser signals may be decreased (that is, a value of N is decreased). In a case, the interval length and/or the quantity of intervals that are/is decreased each time may be the same. The control module 501 may decrease the interval length and/or the quantity of first time intervals based on a step size. The control module 501 may preset a step size a3 of the interval length, and a step size b3 of the quantity of intervals, where both a3 and b3 are greater than 0. It is assumed that an interval length of one of the current N groups of first time intervals is a1, and a quantity of intervals of the current N groups of first time intervals is b1. When the group of first time intervals needs to be decreased, an interval length of a group of new first time intervals corresponding to the group of first time intervals may be a2, and a new quantity of intervals may be b2. It should be understood that the interval length of the new group of first time intervals corresponding to the group of first time intervals and the new quantity of intervals may be a2=a1-a3, and b2=b1, or may be a2=a1, and b2=b1-b3, or may be a2=a1-a3, and b2=b1-b3. In another case, the interval length and/or the quantity of intervals that are/is decreased each time may be the different. The control module 501 may decrease the interval length and/or the quantity of current N first time intervals based on an absolute value of a difference between the second threshold and a value of a main-to-sidelobe ratio of the current correlation peak. When the absolute value of the difference is greater, an amplitude of reducing the interval length and/or the quantity of current N first time intervals may be relatively large. For example, a function (like *y* = *x*, x is the absolute value of the difference between the second threshold and the value of the main-to sidelobe ratio of the correlation peak, and y is the decreased interval length or quantity of first time intervals) may be set to decrease the interval length and/or the quantity of time intervals. The interval length and/or the quantity of current N first time intervals may alternatively be decreased in another manner. The control module 501 may continuously increase the interval length and/or the quantity of N first time intervals. In this case, effect of outputting an echo signal cannot be obviously improved even if the interval length and/or the quantity of current N first time intervals is further increased. Therefore, processing efficiency can be improved, and waste of processed resources can be reduced by reducing the excessive long time interval and/or excessive high quantity of first time intervals.

When determining that no correlation peak exists and the signal-to-noise ratio of the first superimposed signal is greater than the third threshold, the control module 501 may adjust the current N first sequences to obtain the new N first sequences. The control module 501 may adjust the N first sequences, so that the new N first sequences are different from unadjusted first sequences, or may increase or decrease a length of a current sequence. For example, when the current N first sequences are the same, and the first sequence is 10011010, it may be determined that the new first sequence is 11001011, or may be 100110101011, or may be 100110. It should be understood that, when no correlation peak exists, the first superimposed signal may alternatively be a received echo signal. However, due to an external interference signal or another factor, the control module 501 cannot determine the signal as the echo signal. Therefore, whether signal accumulation exists in the first superimposed signal may be determined by using a value of the signal-to-noise ratio, that is, by determining whether the signal-to-noise ratio of the first superimposed signal is greater than the third threshold. When it is determined that the signal-to-noise ratio is greater than the third threshold, it may indicate that signal accumulation exists, and the control module 501 adjusts the N first sequences, so that a signal-to-noise ratio of the first superimposed signal obtained next time can be improved through sequence transformation. When it is determined that the signal-to-noise ratio is less than or equal to the second threshold, it may indicate that no signal accumulation exists in the first superimposed signal, and the target echo signal may not be output. When a surrounding lidar uses a same or similar sequence to detect the ambient environment, interference may be caused to detection performance of the lidar apparatus. In this case, the control module 501 may adjust the N first sequences, so that the lidar apparatus and the surrounding lidar apparatus use different sequences, to improve an anti-interference capability of the lidar apparatus.

In an embodiment, an interval length included in the N groups of second time intervals is less than or equal to a fourth threshold, and a quantity of intervals of the N groups of second time intervals is less than or equal to a fifth threshold.

The control module 501 may set the fourth threshold and the fifth threshold, so that the interval length included in the N groups of second time intervals is less than or equal to the fourth threshold, and the quantity of intervals of the N groups of second time intervals is less than or equal to the fifth threshold. The fourth threshold and/or the fifth threshold may be a fixed value, or may be a variable value. When the fourth threshold and/or the fifth threshold are/is variable values/a variable value, the control module 501 may adjust the value of the fourth threshold and/or the fifth threshold based on received signal quality, channel interference, and the like. A specific method for determining the fourth threshold and the fifth threshold is not limited herein. In the case in which the interval length and an upper limit of the quantity of intervals is set, an endless increase of the time interval can be avoided, so that processing efficiency of the lidar apparatus can be improved, and endless consumption of processing resources can be avoided.

The control module 501 may further include an encoding/decoding control unit 5012, and the foregoing step of determining the current N first sequences and the current N groups of first time intervals based on the first superimposed signal may be performed by the encoding/decoding control unit 5012. The control module 501 may further include a signal selector 5014. The determining steps in FIG. 6A and FIG. 6B may be performed by the signal selector 5014, and adjusting the current N first sequences and the current N groups of first time intervals may be completed by the encoding/decoding control unit 5012. As shown in FIG. 5, it may be understood that the encoding/decoding control unit 5012 may first determine the current N first sequences and the current N groups of first time intervals. The control module 501 may further include a decoder 5013. In a case, the decoder 5013 may include a filter 5011. After receiving the N first electrical signals, the decoder 5013 may complete superimposition and filtering of the first electrical signals based on the current N groups of first time intervals and the current N first sequences, to obtain a first superimposed signal. The signal selector 5014 may obtain the first superimposed signal from the decoder 5013, and then may determine N second sequences and N groups of second time intervals based on the first superimposed signal. For detailed descriptions, refer to the foregoing related descriptions corresponding to FIG. 6A and FIG. 6B.

It should be understood that the current N first sequences and the current N groups of first time intervals determined by the control module 501 are N first sequences and N groups of first time intervals that are used for this cycle. The determined new N first sequences and the determined N groups of new first time intervals are N first sequences and N groups of first time intervals that are used in a next cycle. The N second sequences and the N groups of second time intervals are final results obtained after one or more cycles, are determined best sequences and time intervals that can be used by the apparatus in a current environment, and have a relatively high anti-interference capability. However, the N second sequences and the N groups of second time intervals are applicable only to the current environment. When the environment changes, the determined N second sequences and N groups of second time intervals may change in anti-interference capability. In a possible case, as shown in FIG. 6A and FIG. 6B, when the environment changes, the N second sequences and the N groups of second time intervals that are determined in a current cycle may be used as the N first sequences and the N groups of first time intervals that are determined for the first time in a next cycle. After the cycle, next N second sequences and next N groups of second time intervals may be determined.

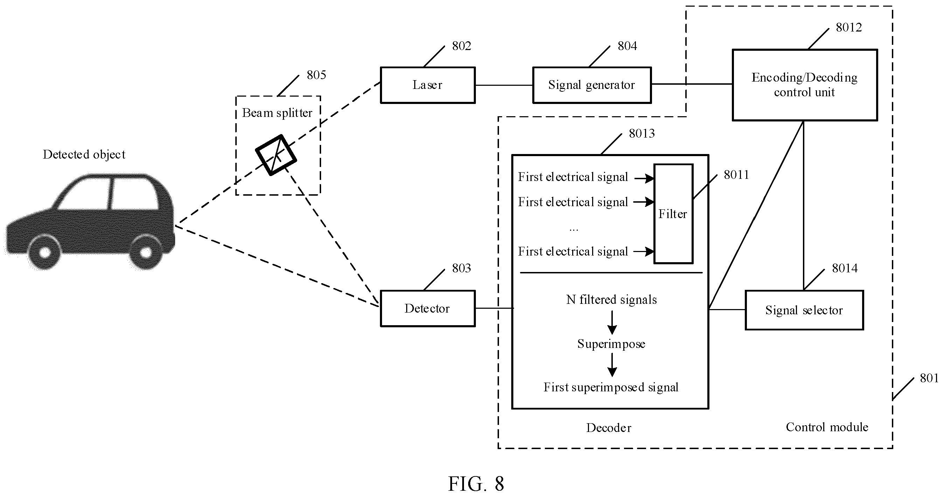

FIG. 8 is a schematic diagram of a structure of still another lidar anti-interference apparatus disclosed in an embodiment of this application. The lidar anti-interference apparatus shown in FIG. 8 is obtained by optimizing the lidar anti-interference apparatus shown in FIG. 3. As shown in FIG. 8, the lidar anti-interference apparatus may include a control module 801, a laser 802, and a detector 803.

For detailed descriptions, refer to related descriptions corresponding to FIG. 3 and FIG. 5.

In an embodiment, the lidar anti-interference apparatus may further include a signal generator 804.

The signal generator 804 is configured to generate N second electrical signals based on N first sequences and N groups of first time intervals.

That the laser 802 is configured to emit N first laser signals based on the N first sequences and the N groups of first time intervals includes:
The laser 802 emits the N first laser signals based on the N second electrical signals.

For detailed descriptions, refer to related descriptions corresponding to FIG. 3 and FIG. 5.

In an embodiment, when the N first sequences are different sequences, that the control module 801 superimposes the N first electrical signals to obtain a first superimposed signal includes:
filtering the N first electrical signals based on the N first sequences, to obtain N filtered signals; and
superimposing the N filtered signals based on the N groups of first time intervals, to obtain the first superimposed signal.

After receiving N second laser signals, the detector 801 may convert the N second laser signals into electrical signals to obtain the N first electrical signals. The detector 803 may send the N first electrical signals to the control module 801. The control module 801 may include a filter 8011. When the N first sequences are different sequences, the control module 801 may first filter the N first electrical signals based on the N first sequences to obtain N filtered signals, and then may superimpose the N filtered signals based on the N groups of first time intervals to obtain the first superimposed signal. In other words, it may be understood that coefficients of N different filters 8011 may be first determined based on the N different first sequences, and then the N first electrical signals may be separately input into the N filters 8011 corresponding to the filtering coefficients for filtering, to obtain the N filtered signals. For detailed descriptions of filtering, refer to related descriptions corresponding to FIG. 7. It should be noted that, in this case, there may be one or more filters 8011, and the filter may correspondingly determine one or more filtering coefficients. For example, when a quantity of filters is 1, an order of the N filtering coefficients may be determined based on an order of the received N first electrical signals. When there are a plurality of filters, one filter may be determined for each first electrical signal, and one filtering coefficient may be determined for each filter. Further, the control module 801 may superimpose the N filtered signals to obtain the first superimposed signal. For a specific superimposition process, refer to the related description in FIG. 4. Details are not described herein again. When the N first sequences are different sequences, even if a sequence of an interference signal is partially the same as a sequence of the first electrical signal, the control module 801 may avoid impact caused by interference through filtering and superimposition. Therefore, an anti-interference capability of a lidar can be improved.

In an embodiment, the lidar anti-interference apparatus may further include a beam splitter 805, and the control module 801 may include a filter 8011.

The beam splitter 805 is configured to receive N third laser signals, transmit N fourth laser signals, and reflect N fifth laser signals. The third laser signal is a laser signal obtained after the first laser signal is transmitted to the beam splitter. The third laser signal includes the fourth laser signal and the fifth laser signal.

The detector 803 is further configured to receive N sixth laser signals, and convert the N sixth laser signals into electrical signals, to obtain N fourth electrical signals. The sixth laser signal is a laser signal obtained after the fifth laser signal is transmitted to the detector 803.

That the control module 801 filters the N first electrical signals based on the N first sequences, to obtain N filtered signals includes:

The control module 801 adjusts a filtering coefficient of the filter 8011 based on the N fourth electrical signals.

The filter 8011 filters the second superimposed signal based on the N first sequences, to obtain the N filtered signals.

The laser 802 may send the N first laser signals to the beam splitter 805, and the beam splitter 805 may receive the N third laser signals. After receiving the N third laser signals, the beam splitter 805 may transmit the N fourth laser signals, and may reflect the N fifth laser signals. For related descriptions, refer to corresponding descriptions in FIG. 5. It should be noted that, after receiving the N sixth laser signals, the detector 803 may convert the N sixth laser signals into the N fourth electrical signals, and then may send the N fourth electrical signals to the control module 801.

After receiving the N fourth electrical signals from the detector 803, the control module 801 may determine the filtering coefficient of the filter 8011 based on the N fourth electrical signals. The control module 801 may perform filtering on the N first electrical signals to obtain the N filtered signals, and then may perform superimposition on the N filtered signals to obtain the first superimposed signal. The control module 801 may first determine that the received N fourth electrical signals are different sequences or partially different sequences, and then may separately determine, based on the N fourth electrical signals, filtering coefficients corresponding to the filter 8011. After determining the filtering coefficient, the control module 801 may further perform filtering and superimposition on the N first electrical signals. For detailed description, refer to related descriptions in FIG. 5.

It should be understood that an order in which the detector 803 receives the sixth laser signal and the second laser signal is not limited herein.

In an embodiment, that the control module 801 determines N second sequences and N groups of second time intervals based on the first superimposed signal includes:
when a correlation peak exists between the N first sequences and the first superimposed signal, and a value of a main-to-sidelobe ratio of the correlation peak is greater than a first threshold, determining the N first sequences as the N second sequences, and determining the N groups of first time intervals as the N groups of second time intervals.

In an embodiment, that the control module 801 determines N second sequences and N groups of second time intervals based on the first superimposed signal further includes:
when a correlation peak exists between the N first sequences and the first superimposed signal, and a value of a main-to-sidelobe ratio is less than or equal to a first threshold, increasing an interval length included in each of the N groups of first time intervals and/or increasing a quantity of intervals included in the N groups of first time intervals, to obtain N groups of new first time intervals.

In an embodiment, that the control module 801 determines N second sequences and N groups of second time intervals based on the first superimposed signal further includes:
when the value of the main-to-sidelobe ratio is greater than a second threshold, decreasing an interval length in each of the N groups of first time intervals and/or decreasing a quantity of intervals in the N groups of first time intervals, to obtain N groups of new first time intervals, where the second threshold is greater than the first threshold.

In an embodiment, that the control module 801 determines N second sequences and N groups of second time intervals based on the first superimposed signal further includes:
when no correlation peak exists, adjusting the N first sequences to obtain new N first sequences.

In an embodiment, that the control module 801 determines N second sequences and N groups of second time intervals based on the first superimposed signal further includes:
when a signal-to-noise ratio of the first superimposed signal is greater than a third threshold, adjusting the N first sequences to obtain N first sequences.

For specific descriptions, refer to related descriptions in FIG. 8. Details are not described herein again.

In an embodiment, an interval length included in the N groups of second time intervals is less than or equal to a fourth threshold, and a quantity of intervals of the N groups of second time intervals is less than or equal to a fifth threshold.

For specific descriptions, refer to related descriptions in FIG. 5. It should be noted that, before determining whether a correlation peak exists between the N first sequences and the first superimposed signal, the control module 801 may first superimpose the N first sequences to obtain a synthesized sequence of the first sequence. Further, the control module 801 may determine whether a correlation peak exists between the synthesized sequence of the first sequence and the first superimposed signal.

The control module 801 may further include an encoding/decoding control unit 8012, and the foregoing step of determining the current N first sequences and the current N groups of first time intervals based on the first superimposed signal may be performed by the encoding/decoding control unit 8012. The control module 801 may further include a signal selector 8014. The determining steps in FIG. 6A and FIG. 6B may be performed by the signal selector 8014, and adjusting the current N first sequences and the current N groups of first time intervals may be completed by the encoding/decoding control unit 8012. The control module 801 may further include a decoder 8013, and the decoder 8013 may perform filtering and superimposition on the N first electrical signals to obtain the first superimposed signal. The decoder 8013 may include a filter 8011. For detailed descriptions, refer to related descriptions corresponding to FIG. 6A and FIG. 6B.

It should be understood that the control module 801 determines the current N first sequences and the current N groups of first time intervals as N first sequences and N groups of first time intervals that are used for this cycle. The determined new N first sequences and the determined N groups of new first time intervals are N first sequences and N groups of first time intervals that are used in a next cycle. The N second sequences and the N groups of second time intervals are final results obtained after one or more cycles, are determined best sequences and time intervals that can be used by the apparatus in a current environment, and have a relatively high anti-interference capability. However, the N second sequences and the N groups of second time intervals are applicable only to the current environment. When the environment changes, the determined N second sequences and N groups of second time intervals may change in anti-interference capability. In a possible case, as shown in FIG. 6A and FIG. 6B, when the environment changes, the N second sequences and the N groups of second time intervals that are determined in a current cycle may be used as the N first sequences and the N groups of first time intervals that are determined for the first time in a next cycle. After the cycle, next N second sequences and next N groups of second time intervals may be determined.

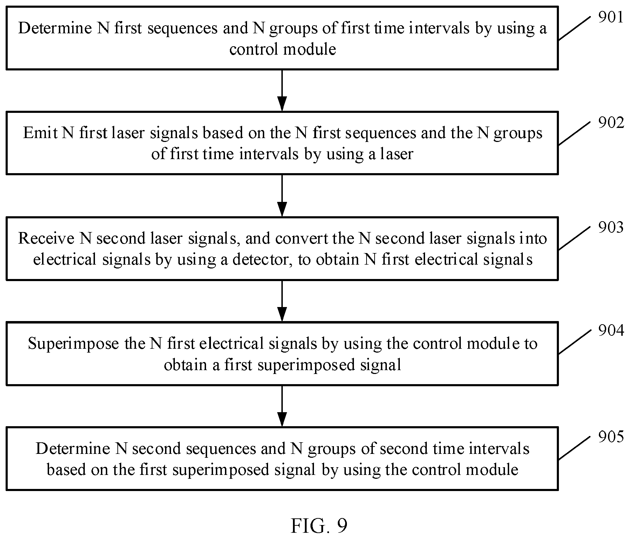

FIG. 9 is a schematic flowchart of a lidar anti-interference method disclosed in an embodiment of this application. As shown in FIG. 9, the lidar anti-interference method may include the following steps.

901: Determine N first sequences and N groups of first time intervals by using a control module.

N is an integer greater than or equal to 1.

902: Emit N first laser signals based on the N first sequences and the N groups of first time intervals by using a laser.

903: Receive N second laser signals, and convert the N second laser signals into electrical signals by using a detector, to obtain N first electrical signals.

904: Superimpose the N first electrical signals by using the control module to obtain a first superimposed signal.

905: Determine N second sequences and N groups of second time intervals based on the first superimposed signal by using the control module.

In an embodiment, the signal generator generates N second electrical signals based on the N first sequences and the N groups of first time intervals. Then, the laser emits the N first laser signals based on the N second electrical signals.

In an embodiment, when the N first sequences are the same, the control module may superimpose the N first electrical signals based on the N groups of first time intervals, to obtain a second superimposed signal, and then filter the second superimposed signal based on the N first sequences, to obtain the first superimposed signal.

In an embodiment, a beam splitter may receive N third laser signals, transmit N fourth laser signals, and reflect N fifth laser signals. The third laser signal is a laser signal obtained after the first laser signal is transmitted to the beam splitter, and the third laser signal may include the fourth laser signal and the fifth laser signal. Alternatively, the detector may receive N sixth laser signals, and convert the N sixth laser signals into electrical signals, to obtain N third electrical signals. The sixth laser signal is a laser signal obtained after the fifth laser signal is transmitted to the detector. The control module may adjust a filtering coefficient of the filter based on the N third electrical signals. The filter may filter the second superimposed signal based on the N first sequences, to obtain the first superimposed signal.

In an embodiment, when the N first sequences are different sequences, the control module may filter the N first electrical signals based on the N first sequences, to obtain N filtered signals, and may superimpose the N filtered signals based on the N groups of first time intervals, to obtain a first superimposed signal.

In an embodiment, the beam splitter may receive N third laser signals, transmit N fourth laser signals, and reflect N fifth laser signals. The third laser signal is a laser signal obtained after the first laser signal is transmitted to the beam splitter, and the third laser signal includes the fourth laser signal and the fifth laser signal. Alternatively, the detector may receive N sixth laser signals, and convert the N sixth laser signals into electrical signals, to obtain N fourth electrical signals. The sixth laser signal is a laser signal obtained after the fifth laser signal is transmitted to the detector. Alternatively, the control module may adjust a filtering coefficient of the filter based on the N fourth electrical signals. Alternatively, the control module may filter the second superimposed signal based on the N first sequences, to obtain the N filtered signals.

In an embodiment, the control module may determine whether a correlation peak exists between the first superimposed signal and the first sequence. When the correlation peak exists and a value of a main-to-sidelobe ratio of the correlation peak is greater than a first threshold, the control module may determine the N first sequences as N second sequences, and may determine the N groups of first time intervals as the N groups of second time intervals.

In an embodiment, the control module may determine whether a correlation peak exists between the first superimposed signal and the first sequence. When the correlation peak exists and the value of the main-to-sidelobe ratio is less than or equal to the first threshold, the control module may increase the interval length included in each of the N groups of first time intervals and/or increase the quantity of intervals included in the N groups of first time intervals, to obtain the N groups of first time intervals.

In an embodiment, when whether a correlation peak exists between the first superimposed signal and the first sequence, and the value of the main-to-sidelobe ratio is greater than a second threshold, the control module may decrease an interval length in each of the N groups of first time intervals and/or decrease a quantity of intervals in the N groups of first time intervals, to obtain N groups of first time intervals. The second threshold is greater than the first threshold.

In an embodiment, the control module may determine whether a correlation peak exists between the first superimposed signal and the first sequence, and when no correlation peak exists, the control module may adjust the N first sequences, to obtain N first sequences.

In an embodiment, the control module may determine whether a correlation peak exists between the first superimposed signal and the first sequence. When no correlation peak exists and a signal-to-noise ratio of the first superimposed signal is greater than a third threshold, the control module may adjust the N first sequences to, obtain N first sequences.

In an embodiment, an interval length included in the N groups of second time intervals is less than or equal to a fourth threshold, and a quantity of intervals of the N groups of second time intervals is less than or equal to a fifth threshold.

In an embodiment, after the control module obtains the first superimposed signal and before the control module determines whether a correlation peak exists between the first superimposed signal and the first sequence, the control module may perform dynamic threshold detection on the first superimposed signal. That is, the control module may determine whether an amplitude of the first superimposed signal is greater than a dynamic threshold value. When the amplitude is greater than the dynamic threshold value, the control module may further determine whether a correlation peak exists between the first superimposed signal and the first sequence. When the value is less than or equal to the dynamic threshold value, the first superimposed signal may be discarded.

It should be noted that, for functions related to a specific procedure of the lidar anti-interference method described in embodiments of this application, refer to related descriptions in embodiments of the lidar anti-interference apparatuses in FIG. 3, FIG. 5, and FIG. 8. Details are not described herein again.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A lidar, comprising a control module, a laser, and a detector, wherein
the control module is configured to determine N first sequences and N groups of first time intervals, wherein N is an integer greater than or equal to 1;
the laser is configured to emit N first laser signals based on the N first sequences and the N groups of first time intervals;
the detector is configured to: receive N second laser signals, and convert the N second laser signals into electrical signals, to obtain N first electrical signals; and
the control module is further configured to determine N second sequences and N groups of second time intervals based on the N first electrical signals.

2. The lidar according to claim 1, wherein the lidar further comprises a signal generator, wherein
the signal generator is configured to generate N second electrical signals based on the N first sequences and the N groups of first time intervals; and
that the laser emits N first laser signals based on the N first sequences and the N groups of first time intervals comprises:
the laser emits the N first laser signals based on the N second electrical signals.

3. The lidar according to claim 1 or 2, wherein the control module is configured to:
superimpose the N first electrical signals, to obtain a first superimposed signal; and
determine N second sequences and N groups of second time intervals based on the first superimposed signal.

4. The lidar according to claim 3, wherein when the N first sequences are the same, the control module is configured to:
superimpose the N first electrical signals based on the N groups of first time intervals, to obtain a second superimposed signal; and
filter the second superimposed signal based on the N first sequences, to obtain the first superimposed signal.

5. The lidar according to claim 3, wherein when the N first sequences are different sequences, the control module is configured to:
filter the N first electrical signals based on the N first sequences, to obtain N filtered signals; and
superimpose the N filtered signals based on the N groups of first time intervals, to obtain a first superimposed signal.

6. The lidar according to claim 4, wherein the lidar further comprises a beam splitter, and the control module comprises a filter, wherein
the beam splitter is configured to: receive N third laser signals, transmit N fourth laser signals, and reflect N fifth laser signals, wherein the third laser signal is a laser signal obtained after the first laser signal is transmitted to the beam splitter, and the third laser signal comprises the fourth laser signal and the fifth laser signal; and
the detector is further configured to: receive N sixth laser signals, and convert the N sixth laser signals into electrical signals, to obtain N third electrical signals, wherein the sixth laser signal is a laser signal obtained after the fifth laser signal is transmitted to the detector; and
that the control module filters the second superimposed signal based on the N first sequences, to obtain a first superimposed signal comprises:
the control module adjusts a filtering coefficient of the filter based on the N third electrical signals; and
the filter filters the second superimposed signal based on the N first sequences, to obtain the first superimposed signal.

7. The lidar according to claim 5, wherein the lidar further comprises a beam splitter, and the control module comprises a filter, wherein
the beam splitter is configured to: receive N third laser signals, transmit N fourth laser signals, and reflect N fifth laser signals, wherein the third laser signal is a laser signal obtained after the first laser signal is transmitted to the beam splitter, and the third laser signal comprises the fourth laser signal and the fifth laser signal; and
the detector is further configured to: receive N sixth laser signals, and convert the N sixth laser signals into electrical signals, to obtain N fourth electrical signals, wherein the sixth laser signal is a laser signal obtained after the fifth laser signal is transmitted to the detector; and
that the control module filters the N first electrical signals based on the N first sequences, to obtain N filtered signals comprises:
the control module adjusts a filtering coefficient of the filter based on the N fourth electrical signals; and
the filter filters the second superimposed signal based on the N first sequences, to obtain the N filtered signals.

8. The lidar according to any one of claims 3 to 7, wherein when a correlation peak exists between the N first sequences and the first superimposed signal, and a value of a main-to-sidelobe ratio of the correlation peak is greater than a first threshold, the control module is configured to:
determine the N first sequences as the N second sequences, and determine the N groups of first time intervals as the N groups of second time intervals.

9. The lidar according to any one of claims 3 to 7, wherein when a correlation peak exists between the N first sequences and the first superimposed signal, and a value of a main-to-sidelobe ratio of the correlation peak is less than or equal to a first threshold, the control module is configured to:
increase an interval length comprised in each of the N groups of first time intervals and/or increase a quantity of intervals comprised in the N groups of first time intervals, to obtain next N groups of first time intervals.

10. The lidar according to claim 8 or 9, wherein when no correlation peak exists, the control module is further configured to:
adjust the N first sequences to obtain next N first sequences.

11. The lidar according to claim 8, wherein when the value of the main-to-sidelobe ratio is greater than a second threshold, the control module is further configured to:
decrease an interval length in each of the N groups of first time intervals and/or decrease a quantity of intervals in the N groups of first time intervals, to obtain next N groups of first time intervals, wherein the second threshold is greater than the first threshold.

12. The lidar according to claim 8 or 9, wherein when a signal-to-noise ratio of the first superimposed signal is greater than a third threshold, the control module is further configured to:
adjust the N first sequences, to obtain next N first sequences.

13. The lidar according to any one of claims 1 to 12, wherein an interval length comprised in the N groups of second time intervals is less than or equal to a fourth threshold, and a quantity of intervals of the N groups of second time intervals is less than or equal to a fifth threshold.

14. An anti-interference method, wherein the method is applied to a lidar, and the method comprises:
determining N first sequences and N groups of first time intervals, wherein N is an integer greater than or equal to 1;
emitting N first laser signals based on the N first sequences and the N groups of first time intervals;
receiving N second laser signals, and converting the N second laser signals into electrical signals, to obtain N first electrical signals; and
determining N second sequences and N groups of second time intervals based on the N first electrical signals.

15. The method according to claim 14, wherein the method further comprises:
generating N second electrical signals based on the N first sequences and the N groups of first time intervals; and
the emitting N first laser signals based on the N first sequences and the N groups of first time intervals comprises:
emitting the N first laser signals based on the N second electrical signals.

16. The method according to claim 14 or 15, wherein the determining N second sequences and N groups of second time intervals based on the N first electrical signals comprises:
superimposing the N first electrical signals, to obtain a first superimposed signal; and
determining the N second sequences and the N groups of second time intervals based on the first superimposed signal.

17. The method according to claim 16, wherein when the N first sequences are the same, the superimposing the N first electrical signals, to obtain a first superimposed signal comprises:
superimposing the N first electrical signals based on the N groups of first time intervals, to obtain a second superimposed signal; and
filtering the second superimposed signal based on the N first sequences, to obtain the first superimposed signal.

18. The method according to claim 16, wherein when the N first sequences are different sequences, the superimposing the N first electrical signals, to obtain a first superimposed signal comprises:
filtering the N first electrical signals based on the N first sequences, to obtain N filtered signals; and
superimposing the N filtered signals based on the N groups of first time intervals, to obtain the first superimposed signal.

19. The method according to claim 17, wherein the lidar comprises a detector, a beam splitter and a filter, and the method further comprises:
receiving N third laser signals, transmitting N fourth laser signals, and reflecting N fifth laser signals, wherein the third laser signal is a laser signal obtained after the first laser signal is transmitted to the beam splitter, and the third laser signal comprises the fourth laser signal and the fifth laser signal; and
receiving N sixth laser signals, and converting the N sixth laser signals into electrical signals, to obtain N third electrical signals, wherein the sixth laser signal is a laser signal obtained after the fifth laser signal is transmitted to the detector; and
the filtering the second superimposed signal based on the N first sequences, to obtain the first superimposed signal comprises:
adjusting a filtering coefficient of the filter based on the N third electrical signals; and
filtering the second superimposed signal based on the N first sequences, to obtain the first superimposed signal.

20. The method according to claim 18, wherein the lidar comprises a detector, a beam splitter and a filter, and the method further comprises:
receiving N third laser signals, transmitting N fourth laser signals, and reflecting N fifth laser signals, wherein the third laser signal is a laser signal obtained after the first laser signal is transmitted to the beam splitter, and the third laser signal comprises the fourth laser signal and the fifth laser signal; and
receiving N sixth laser signals, and converting the N sixth laser signals into electrical signals, to obtain N fourth electrical signals, wherein the sixth laser signal is a laser signal obtained after the fifth laser signal is transmitted to the detector; and
the filtering the N first electrical signals based on the N first sequences, to obtain N filtered signals comprises:
adjusting a filtering coefficient of the filter based on the N fourth electrical signals; and
filtering the second superimposed signal based on the N first sequences, to obtain the N filtered signals.

21. The method according to any one of claims 16 to 20, wherein when a correlation peak exists between the N first sequences and the first superimposed signal, and a value of a main-to-sidelobe ratio of the correlation peak is greater than a first threshold, the determining the N second sequences and the N groups of second time intervals based on the first superimposed signal comprises:
determining the N first sequences as the N second sequences, and determining the N groups of first time intervals as the N groups of second time intervals.

22. The method according to any one of claims 16 to 20, wherein when a correlation peak exists between the N first sequences and the first superimposed signal, and a value of a main-to-sidelobe ratio is less than or equal to a first threshold, the determining the N second sequences and the N groups of second time intervals based on the first superimposed signal further comprises:
increasing an interval length comprised in each of the N groups of first time intervals and/or increasing a quantity of intervals comprised in the N groups of first time intervals, to obtain next N groups of first time intervals.

23. The method according to claim 21 or 22, wherein when no correlation peak exists, the determining the N second sequences and the N groups of second time intervals based on the first superimposed signal further comprises:
adjusting the N first sequences, to obtain next N first sequences.

24. The method according to claim 21, wherein when the value of the main-to-sidelobe ratio is greater than a second threshold, the determining the N second sequences and the N groups of second time intervals based on the first superimposed signal further comprises:
decreasing an interval length in each of the N groups of first time intervals and/or decreasing a quantity of intervals in the N groups of first time intervals, to obtain next N groups of first time intervals, wherein the second threshold is greater than the first threshold.

25. The method according to claim 21 or 22, wherein when a signal-to-noise ratio of the first superimposed signal is greater than a third threshold, the determining the N second sequences and the N groups of second time intervals based on the first superimposed signal further comprises:
adjusting the N first sequences, to obtain next N first sequences.

26. The method according to any one of claims 14 to 25, wherein an interval length comprised in the N groups of second time intervals is less than or equal to a fourth threshold, and a quantity of intervals of the N groups of second time intervals is less than or equal to a fifth threshold.

27. A vehicle, wherein the vehicle comprises the lidar according to any one of claims 1 to 13.
